# EUROPÄISCHE PATENTSCHRIFT

(11) **EP 3 456 913 B1**
(45) Veröffentlichungstag und Bekanntmachung des Hinweises auf die Patenterteilung: **07.09.2022**
(21) Anmeldenummer: 17191866.7
(22) Anmeldetag: 19.09.2017
(51) Int. Cl.: E06B 9/24, B32B 17/10, B60J 3/04, E06B 9/68

(54) **BIONISCHE SONNENSCHUTZVORRICHTUNG**
BIONIC SUN PROTECTION DEVICE
DISPOSITIF DE PROTECTION SOLAIRE BIONIQUE

(43) Veröffentlichungstag der Anmeldung: 20.03.2019
(73) Patentinhaber: Ford Global Technologies, LLC, Dearborn, MI 48126 (US)
(72) Erfinder: Schmierer, Ralf, 50765 Köln (DE); Stadtler, Arnold, 50935 Koeln (DE)
(74) Vertreter: Markowitz, Markus

(56) Entgegenhaltungen:
- DE-A1-102012 223 737
- US-A1- 2011 163 866
- US-B2- 8 102 586

## Beschreibung

Die vorliegende Erfindung betrifft eine Sonnenschutzvorrichtung zum Beschatten einer lichtdurchlässigen Oberfläche. Weiterhin betrifft die Erfindung ein Sonnendach und ein Fahrzeug. Die Erfindung betrifft darüber hinaus ein Verfahren zum Betreiben einer Sonnenschutzvorrichtung zum Beschatten einer lichtdurchlässigen Oberfläche.

Bisher verwendete Sonnendächer, insbesondere Sonnendächer für Kraftfahrzeuge, bieten dem Nutzer ein festgelegtes Beschattungsniveau und eine durch die Ausgestaltung des Sonnendachs festgelegte Wärmeübertragung. Insbesondere im Zusammenhang mit Sonnendächern für Fahrgasträume wird dies von vielen Fahrgästen und Nutzern als unkomfortabel empfunden. Es besteht beispielsweise immer der Konflikt, dass es entweder zu warm oder zu hell ist.

In dem Dokument US 8,102,586 B2 wird ein automatisch elektronisch gesteuertes Fensterbeschattungssystem für Häuser und Fahrzeuge beschrieben, wobei das Fenster oder die Fenster teilweise in Abhängigkeit von der Lichtintensität und der Einstrahlungsrichtung abgetönt werden. In dem Dokument DE 10 2012 223 737 A1 wird eine Verdunkelungsvorrichtung mit mindestens einem ansteuerbaren Mikroabschirmbereich und/oder zumindest einem ansteuerbaren Mikrodurchlassbereich offenbart.

Vor dem dargestellten Hintergrund besteht ein Interesse an einer verbesserten Sonnenschutzvorrichtung, die den oben genannten Nachteilen begegnet. Es ist daher Aufgabe der vorliegenden Erfindung, eine verbesserte Sonnenschutzvorrichtung zum Beschatten einer lichtdurchlässigen Oberfläche und ein Verfahren zum Betreiben einer Sonnenschutzvorrichtung zur Verfügung zu stellen, die insbesondere eine flexible Berücksichtigung der jeweils vorliegenden Lichteinstrahlungsbedingungen ermöglicht.

Diese Aufgabe wird durch eine Sonnenschutzvorrichtung nach Patentanspruch 1, ein Sonnendach nach Patentanspruch 7, ein Fahrzeug nach Patentanspruch 8 und durch ein Verfahren zum Betreiben einer Sonnenschutzvorrichtung nach Patentanspruch 9 gelöst. Die abhängigen Ansprüche enthalten weitere, vorteilhafte Ausgestaltungen der vorliegenden Erfindung.

Die erfindungsgemäße Sonnenschutzvorrichtung zum Beschatten einer lichtdurchlässigen Oberfläche umfasst ein lichtdurchlässiges Bauteil mit einer Oberfläche und einer Anzahl auf der Oberfläche rasterförmig angeordneter Flächenelemente. Die Flächenelemente sind dazu ausgelegt ihren Transmissionsgrad, insbesondere ihren Transmissionsgrad für sichtbares Licht, zu verändern. Die Sonnenschutzvorrichtung umfasst mindestens eine Vorrichtung, zum Beispiel einen Sensor, zur Bestimmung der Strahlungsintensität der Sonnenlichteinstrahlung, beispielsweise der Lichtstärke, mindestens eine Vorrichtung zur Bestimmung der Einstrahlungsrichtung des Sonnenlichtes und mindestens eine Steuereinrichtung. Die Steuereinrichtung ist dazu ausgelegt, in Abhängigkeit von der Strahlungsintensität und der Einstrahlungsrichtung des Sonnenlichts den Transmissionsgrad einer ausgewählten Anzahl der Flächenelemente zu verringern, sodass die ausgewählten Flächenelemente ein Muster bilden beziehungsweise erzeugen. Die Steuereinrichtung ist dazu ausgelegt, die Flächenelemente, deren Transmissionsgrad verringert wird, so auszuwählen, dass diese ein eine Mehrzahl an dreieckigen Strukturen umfassendes Muster bilden oder erzeugen. Das Muster ist in Abhängigkeit von der Einstrahlungsrichtung des Sonnenlichts veränderbar.

Die erfindungsgemäße Sonnenschutzvorrichtung hat den Vorteil, dass eine Veränderung des erzeugten Musters und der beschatteten Fläche ermöglicht wird und damit das Ausmaß der Beschattung, zum Beispiel die Intensität der Beschattung, und die Form der Beschattung an den Schattenwurf von in der Natur vorkommenden Schattenspendern, zum Beispiel an den Schattenwurf von Bäumen, angepasst werden kann. Auf diese Weise kann eine sehr organische und von einem Nutzer als angenehm empfundene Beschattung erreicht werden. Dabei wird gleichzeitig dem oben beschriebenen Problem einer entweder zu starken oder zu geringen Beschattung und einer entsprechend zu starken oder zu geringen Wärmeentwicklung begegnet.

Die rasterförmig angeordneten Flächenelemente können in einer Ebene nebeneinander angeordnet sein. Sie können miteinander verbunden sein. Die Flächenelemente können als Pixel-Elemente oder Mosaik-Elemente ausgestaltet sein. Die Steuereinrichtung ist bevorzugt als elektronische Steuereinrichtung (ECU - Electronic Control Unit) ausgestaltet sein.

Die Steuereinrichtung ist dazu ausgelegt, in Abhängigkeit von der Strahlungsintensität, zum Beispiel der Lichtstärke, und der Einstrahlungsrichtung des Sonnenlichts den Transmissionsgrad einer ausgewählten Anzahl der Flächenelemente zu verringern, sodass die ausgewählten Flächenelemente ein eine Mehrzahl an dreieckigen Strukturen umfassendes Muster bilden oder erzeugen. Die Steuereinrichtung ist dazu ausgelegt, die Flächenelemente, deren Transmissionsgrad verringert wird, so auszuwählen, dass diese ein eine Mehrzahl an dreieckigen Strukturen umfassendes Muster bilden oder erzeugen.

Die Erzeugung eines dreieckige Strukturen umfassenden Musters, insbesondere eines aus dreieckigen Strukturen gebildeten Musters, hat den Vorteil, dass es sich besonders gut zur Imitation von durch Bäume oder Sträucher erzeugten Schattenwürfen eignet. Es kann dadurch eine Beschattung realisiert werden, die sich an in der Natur vorkommenden Schattenwürfen orientiert. Auch die im Rahmen der Erfindung realisierte dynamische Anpassung, beziehungsweise die Möglichkeit einer solchen Anpassung, der Form und Gestaltung des Musters an die Einstrahlungsrichtung des Sonnenlichts spiegelt die in der Natur vorkommenden Veränderungen der Richtung und der Größe von Schattenwürfen wider. Bevorzugt ist die Steuereinrichtung dazu ausgelegt, die Dichte der ausgewählten Flächenelemente in Richtung der Projektion der Sonneneinstrahlung auf die Oberfläche zu verringern. Mit anderen Worten werden die der Sonne zugewandten Bereiche der Oberfläche stärker verdunkelt. Auch dies ist an dem natürlichen Schattenwurf von Pflanzen oder Gegenständen in der Natur orientiert, wo ebenfalls die stärkste Verdunkelung an Positionen zu beobachten ist, an denen das Schatten spendende Objekt geometrisch zwischen der Sonne und dem Beobachter angeordnet ist. In einer besonders vorteilhaften Ausgestaltung ist die Steuereinrichtung dazu ausgelegt, die Flächenelemente so auszuwählen, dass diese ein Muster erzeugen, welches den Schattenwurf eines Baumes imitiert. Dies hat den Vorteil, dass sich der Nutzer in einer natürlichen Umgebung fühlt und dies von ihm in der Regel als angenehm empfunden wird. Darüber hinaus wird durch die an der Natur orientierte Gestaltung des Schattenwurfs gleichzeitig gewährleistet, dass ein ausgewogenes Verhältnis zwischen einer hinreichenden Beschattung, beziehungsweise Verdunklung, und der mit einer Verdunklung verbundenen Wärmeentwicklung erreicht wird.

In einer weiteren Variante kann die Steuereinrichtung dazu ausgelegt sein, die Flächenelemente so auszuwählen, dass diese ein fraktale umfassendes Muster erzeugen. Insbesondere kann die Steuereinrichtung dazu ausgelegt sein, die Flächenelemente so auszuwählen, dass diese ein Muster in der Form eines Sierpinski-Dreiecks erzeugen. Die Verwendung von Fraktalen oder Fraktale umfassenden Strukturen, insbesondere von Sierpinski-Dreiecken, hat den Vorteil, dass der derartige Muster mathematisch vergleichsweise einfach umzusetzen sind und gleichzeitig natürliche Vorgänge und Entwicklungsprozesse wiederspiegeln. Zum Beispiel kann der Schattenwurf eines Baumes mit Hilfe von Fraktalen, zum Beispiel mit Hilfe eines oder mehrerer Sierpinski-Dreiecke, auf einfache Weise imitiert werden.

Eine Anzahl der Flächenelemente, beispielsweise alle verwendeten Flächenelemente, kann Glas und/oder elektrochromatisches Material und/oder thermochromatisches Material und/oder micro-blinds, also schaltbares Glas, umfassendes Material und/oder nanokristallines Material und/oder PDLC-Material, insbesondre PDLC-Glas, (PDLC - polymer dispersed liquid crystal) und/oder Flüssigkristall-Material umfassen. Insbesondere kann die Oberfläche der Vorrichtung mit einem LCD-Film (Flüssigkristallanzeigen-Film, LCD - liquid crystal display) überzogen sein. Mit Hilfe der genannten Materialien lässt sich die Schaltbarkeit der Flächenelemente in Bezug auf ihren Transmissionsgrad beispielhaft umsetzen.

Das erfindungsgemäße Sonnendach, welches insbesondere für ein Fahrzeug ausgelegt sein kann, umfasst eine zuvor beschriebene erfindungsgemäße Vorrichtung. Das erfindungsgemäße Fahrzeug umfasst eine zuvor beschriebene erfindungsgemäße Vorrichtung und/oder ein erfindungsgemäßes Sonnendach. In einer beispielhaften Variante kann das Fahrzeug eine Anzahl an Fensterscheiben oder Spiegeln umfassen, die mit einer oben beschriebenen erfindungsgemäßen Vorrichtung ausgestattet sind.

Das erfindungsgemäße Sonnendach und das erfindungsgemäße Fahrzeug haben grundsätzlich dieselben Merkmale und Eigenschaften, sowie Vorteile, wie die oben beschriebene erfindungsgemäße Vorrichtung. Bei dem Fahrzeug kann es sich um Kraftfahrzeug, insbesondere einen Personenkraftwagen, einen Lastkraftwagen, ein Motorrad, aber auch um ein Schiff oder ein Flugzeug handeln. Im Falle von Schiffen oder Flugzeugen kann die Steuereinrichtung dazu ausgelegt sein, die Flächenelemente so auszuwählen, dass diese ein Muster erzeugen, welches den Schattenwurf mindestens einer Wolke imitiert.

Das erfindungsgemäße Verfahren zum Betreiben einer Sonnenschutzvorrichtung zum Beschatten einer lichtdurchlässigen Oberfläche betrifft eine Sonnenschutzvorrichtung, die ein lichtdurchlässiges Bauteil mit einer Oberfläche und einer Anzahl auf der Oberfläche rasterförmig angeordneter Flächenelemente umfasst. Dabei sind die Flächenelemente dazu ausgelegt, ihren Transmissionsgrad zu verändern, insbesondere ihren Transmissionsgrad für sichtbares Licht zu verändern. Die Flächenelemente können in einer Ebene nebeneinander angeordnet sein. Die Flächenelemente kommen miteinander verbunden sein. Im Rahmen des erfindungsgemäßen Verfahrens wird die Strahlungsintensität, insbesondere die Lichtstärke, der Sonnenlichteinstrahlung auf die Oberfläche bestimmt. Weiterhin wird die Richtung der Sonnenlichteinstrahlung in Bezug auf die Oberfläche bestimmt. Falls die Strahlungsintensität, insbesondere die Lichtstärke, einen Schwellenwert überschreitet, wird der Transmissionsgrad einer Anzahl an Flächenelementen verringert. Dabei wird die Anzahl der Flächenelemente in Abhängigkeit von der Strahlungsintensität festgelegt und die Flächenelemente werden in Bezug auf ihre Position auf der Oberfläche so ausgewählt, dass ein Muster erzeugt wird. Das Muster wird in Abhängigkeit von der Einstrahlungsrichtung des Sonnenlichts verändert.

Das erfindungsgemäße Verfahren eignet sich insbesondere zur Verwendung einer oben beschriebenen erfindungsgemäßen Vorrichtung. Das Verfahren hat grundsätzlich die oben bereits beschriebenen Vorteile. Insbesondere lässt sich durch die Veränderung des erzeugten Musters in Abhängigkeit von der Einstrahlungsrichtung des Sonnenlichts ein als natürlich empfundener Schattenwurf erzeugen. Dabei kann der Schattenwurf bevorzugt in der Natur vorkommende Schattenwürfe von Pflanzen, beispielsweise Bäumen, oder Wolken imitieren.

Die Flächenelemente werden in Bezug auf ihre Position auf der Oberfläche so ausgewählt, dass ein eine Mehrzahl an dreieckigen Strukturen umfassendes Muster erzeugt wird. In einer vorteilhaften Variante werden die Flächenelemente so ausgewählt, dass die Dichte der ausgewählten Flächenelemente in Richtung der Projektion der Richtung der Sonneneinstrahlung auf die Oberfläche abnimmt. Die Flächenelemente können grundsätzlich so ausgewählt werden, dass sie ein Muster erzeugen, welches den Schattenwurf eines Baumes imitiert. Dies wird von Nutzern als besonders angenehm empfunden und hat gleichzeitig den Vorteil, dass ein ausgewogenes Verhältnis an Beschattung und durch die Beschattung verursachter Wärmeentwicklung gebildet werden kann.

Die Flächenelemente werden bevorzugt so ausgewählt, dass ein Fraktale umfassendes Muster erzeugt wird. Zum Beispiel können die Flächenelemente so ausgewählt werden, dass diese ein Muster in der Form mindestens eines Sierpinski-Dreiecks erzeugen.

Prinzipiell können die oben beschriebenen Muster, insbesondere ein Muster, welches den Schattenwurf eines Baumes imitiert, oder ein Fraktale umfassendes Muster einerseits durch die Flächenelemente erzeugt werden, deren Transmissionsgrad verringert wurde, die also abgetönt wurden, erzeugt werden. Es ist aber auch möglich, ein entsprechendes Muster durch die Flächenelemente zu erzeugen, die nicht abgetönt wurden, also deren Transmissionsgrad nicht verringert wurde. Auf diese Weise kann beispielsweise der Schattenwurf eines Baumes als negativ imitiert werden.

Prinzipiell können die im Rahmen des erfindungsgemäßen Verfahrens verwendeten Flächenelemente die oben im Zusammenhang mit der erfindungsgemäßen Vorrichtung genannten Materialien umfassen. Insbesondere kann die Oberfläche der Sonnenschutzvorrichtung mit einem LCD-Film (Flüssigkristallanzeigen-Film, LCD - liquid crystal display) überzogen sein.

Die vorliegende Erfindung bietet eine an der Natur inspirierte Ausgestaltung einer Sonnenschutzvorrichtung, die beispielsweise das Schattenmuster ähnlich dem Schattenwurf eines Baumes imitiert. Die Orientierung an in der Natur vorkommenden Schattenwürfen von natürlichen Schattenspendern vermindert die oben beschriebenen Nachteile der bisher bekannten Beschattungsvorrichtungen für transparente Oberflächen, insbesondere für Fahrzeugscheiben und Fahrzeugdächer.

Die Größe und die geometrische Ausgestaltung des im Rahmen der Erfindung erzeugten Schattenmusters kann dabei so angepasst werden, dass das erzeugte Muster die für den Nutzer günstigste Form in Bezug auf den erzeugten Schattenwurf aufweist. Auf diese Weise kann eine besonders günstige Mischung aus Verdunklung, zum Beispiel Abtönung, von transparenten Oberflächen und der damit verbundenen Hitzeerzeugung erreicht werden. Die in der Natur beobachtete Lichtverteilung unter einem Baum stellt ein nachahmenswertes Beispiel dar, da hier auf natürliche Weise eine Kombination aus optimaler Temperatur und gleichzeitig ausreichender Belichtung, die insbesondere ein Pflanzenwachstum ermöglicht, in natürlicher Form realisiert ist.

Weitere Merkmale, Eigenschaften und Vorteile der vorliegenden Erfindung werden im Folgenden anhand eines Ausführungsbeispiels unter Bezugnahme auf die beigefügten Figuren näher beschrieben. Alle bisher und im Folgenden beschriebenen Merkmale sind dabei sowohl einzeln als auch in einer beliebigen Kombination miteinander vorteilhaft. Das im Folgenden beschriebene Ausführungsbeispiel stellt lediglich ein Beispiel dar, welches den Gegenstand der Erfindung jedoch nicht beschränkt.
- Fig. 1: zeigt schematisch eine erfindungsgemäße Sonnenschutzvorrichtung in Form eines Sonnendaches für ein Kraftfahrzeug in einer perspektivischen Ansicht.
- Fig. 2: zeigt schematisch einen Ausschnitt der Oberfläche des in der Figur 1 gezeigten Sonnendaches und den dadurch erzeugten Schattenwurf in einer perspektivischen Ansicht.
- Fig. 3: zeigt schematisch den in der Figur 2 gezeigten Ausschnitt der Oberfläche der Sonnenschutzvorrichtung und den dadurch erzeugten Schattenwurf jeweils in einer Draufsicht.
- Fig. 4: zeigt schematisch die Projektion der Einstrahlungsrichtung des Sonnenlichts auf die Oberfläche der Sonnenschutzvorrichtung in einer perspektivischen Ansicht.
- Fig. 5: zeigt schematisch ein erfindungsgemäßes Kraftfahrzeug.

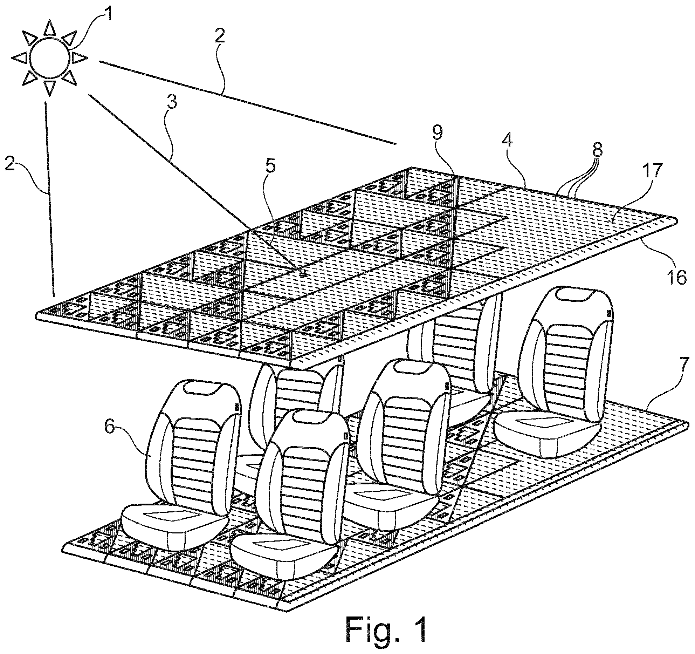

Die Figur 1 zeigt schematisch eine Sonnenschutzvorrichtung 4. Diese ist in der vorliegenden Ausführungsvariante als ein Sonnendach für ein Fahrzeug ausgestaltet. Die Sonnenschutzvorrichtung 4 kann ebenso für Fensterscheiben, Glasdächer, Glaswände, oder grundsätzlich lichtdurchlässige Fenster, Türen, Wände oder andere Bauteile verwendet werden. Im Falle einer Anwendung im Zusammenhang mit einem Fahrzeug kann es sich bei dem Fahrzeug beispielsweise um ein Flugzeug, ein Schiff oder ein Kraftfahrzeug 15, beispielsweise einen Personenkraftwagen, einen Lastkraftwagen, ein Motorrad oder ein anderes Kraftfahrzeug, handeln.

In der in der Figur 1 gezeigten Variante sind beispielhaft Sitze 6 eines Kraftfahrzeuges angedeutet, über denen ein nicht explizit gezeigtes Dach mit einer lichtdurchlässigen Oberfläche angeordnet ist. Das Fahrzeugdach umfasst ein Dachfenster und ist mit einer erfindungsgemäßen Sonnenschutzvorrichtung 4 ausgestaltet.

Die Sonnenschutzvorrichtung 4 umfasst ein lichtdurchlässiges Bauteil 16 mit einer Oberfläche 17 und einer Anzahl auf der Oberfläche 17 rasterförmig angeordneter Flächenelemente 8. Die Flächenelemente 8 sind dazu ausgelegt, ihren Transmissionsgrad zu verändern, insbesondere ihren Transmissionsgrad für sichtbares Licht zu verändern. In dem gezeigten Beispiel ist der Transmissionsgrad für das mit der Bezugsziffer 9 beispielhaft gekennzeichnete Flächenelement herabgesetzt. Das Flächenelement 9 ist also abgetönt. Durch die teilweise abgetönten, beziehungsweise in ihren Transmissionsgrad herabgesetzten, Flächenelemente 8 und 9 wird auf den Fahrzeugsitzen 6, also beispielsweise in einem Fahrgastraum, ein Schattenwurf erzeugt. Dieser ist mit der Bezugsziffer 7 gekennzeichnet.

Die erfindungsgemäße Vorrichtung 4 umfasst weiterhin mindestens eine Vorrichtung zur Bestimmung der Strahlungsintensität der Sonnenlichteinstrahlung 2. Die Sonne ist in der Figur 1 schematisch mit der Bezugsziffer 1 gekennzeichnet. Die von ihr ausgehende Strahlung ist schematisch durch einen Lichtkegel 2 angedeutet. Die Einstrahlungsrichtung des Sonnenlichts auf die Oberfläche 17 ist mit der Bezugsziffer 3 durch einen Pfeil gekennzeichnet. Die Projektion der Einstrahlungsrichtung 3 auf die Oberfläche 17 ist durch einen Pfeil mit der Bezugsziffer 5 gekennzeichnet.

Die Sonnenschutzvorrichtung 4 umfasst zudem mindestens eine Vorrichtung zur Bestimmung der Einstrahlungsrichtung 3 des Sonnenlichts. Die Vorrichtung zur Bestimmung der Strahlungsintensität und die der Vorrichtung zur Bestimmung der Einstrahlungsrichtung des Sonnenlichts können jeweils einen oder mehrere Sensoren umfassen. Die Strahlungsintensität und die Einstrahlungsrichtung können zum Beispiel auch mittels einer einzigen Vorrichtung bestimmt werden. Die genannten Vorrichtungen sind in der Figur 1 nicht gezeigt. Sie können grundsätzlich auf oder an dem Dach eines Kraftfahrzeugs angeordnet sein beziehungsweise zur Anordnung auf oder an dem Dach eines Kraftfahrzeugs ausgelegt sein.

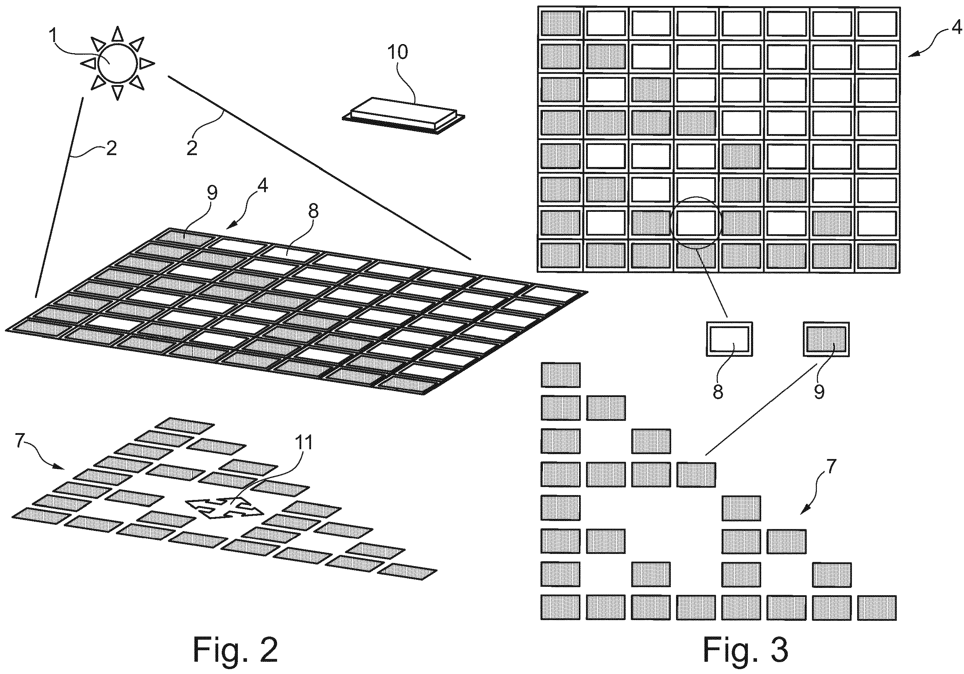

Die erfindungsgemäße Sonnenschutzvorrichtung 4 umfasst zudem eine in der Figur 1 nicht gezeigte Steuereinrichtung 10 (siehe Figur 3). Die Steuereinrichtung 10 ist dazu ausgelegt, in Abhängigkeit von der Strahlungsintensität und der Einstrahlungsrichtung 3 des Sonnenlichts den Transmissionsgrad einer ausgewählten Anzahl der Flächenelemente 8 und 9 zu verringern, so dass die ausgewählten Flächenelemente 9 ein Muster bilden oder erzeugen, welches in Abhängigkeit von der Einstrahlungsrichtung 3 des Sonnenlichts veränderbar ist.

In der in der Figur 1 gezeigten Variante wird durch die mit der Bezugsziffer 9 gekennzeichneten Flächenelemente ein Muster gebildet. Das gezeigte Muster umfasst eine Mehrzahl an dreieckigen Strukturen. Es ist in der Form eines Sierpinski-Dreiecks gestaltet. Es umfasst also Fraktale und stellt eine schematische Imitation des Schattenwurfs eines Baumes dar.

Grundsätzlich ist es vorteilhaft, wenn die Dichte der ausgewählten Flächenelemente 9 in Richtung der Projektion 5 auf die Oberfläche 17, die einer Projektion der Sonneneinstrahlung 3 entspricht, abnimmt. Dadurch wird gewährleistet, dass der Bereich der Oberfläche 17, der von der Sonneneinstrahlung am meisten betroffen ist, am stärksten abgedunkelt wird.

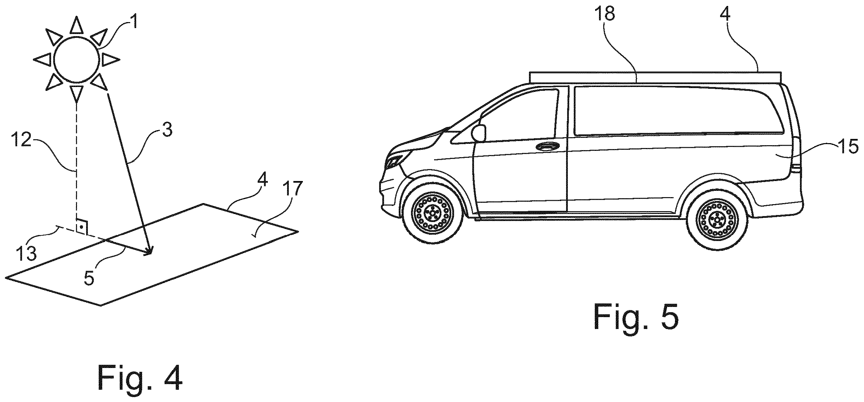

Die Bildung der Projektionsrichtung 5 beziehungsweise deren Ermittlung ist schematisch in der Figur 4 gezeigt. In dem dort gezeigten Beispiel wird ausgehend von einem Lot oder einer vertikalen Linie 12 von der Sonne 1 in Richtung auf die Erde, der Einstrahlungsrichtung 3 und einer die Einstrahlungsrichtung 3 in einer horizontalen Linie 13 entlang der Oberfläche 17 ein rechtwinkliges Dreieck gebildet. Dabei gibt die Richtung der horizontalen Linie 13 auf der Oberfläche 17 die Projektionsrichtung 5 an.

In der Figur 2 ist ein Ausschnitt der Oberfläche 17 der erfindungsgemäßen Vorrichtung 4 in perspektivischer Ansicht vergrößert dargestellt. Weiterhin ist darunter der dadurch erzeugte Schattenwurf 7 schematisch dargestellt. Die Veränderung des Schattenwurfes 7 beziehungsweise die Veränderung des erzeugten Musters ist durch Pfeile 11 gekennzeichnet. Vorzugsweise wird das Schattenmuster basierend auf der Position der Sonne 1 oder in Abhängigkeit von der Einstrahlungsrichtung 3 und ihrer Projektion 5 auf die Oberfläche 17 verändert. Die ausgewählten Flächenelemente 9, die in ihrem Transmissionsgrad herabgesetzt wurden, können zum Beispiel bei einer Veränderung des Winkels der Einstrahlungsrichtung 3 oder ihrer Projektion 5 um eine festgelegte Anzahl an Flächenelementen in eine festgelegte Richtung 11 auf der Oberfläche 17 verschoben werden. Mit anderen Worten wird die Auswahl der Position der Flächenelemente 9, deren Transmissionsgrad herabgesetzt wird, verändert.

Die Figur 3 zeigt schematisch einen Ausschnitt der erfindungsgemäßen Sonnenschutzvorrichtung 4 in einer Draufsicht. Im unteren Teil der Figur 3 ist der durch den im oberen Teil gezeigten Ausschnitt erzeugte Schattenwurf 7 in einer Draufsicht gezeigt. Es stellen die dunkel hinterlegten Flächenelemente 9 die Flächenelemente dar, an deren Transmissionsgrad verringert wurde. Die hell dargestellten Flächenelemente 8 kennzeichnen die in ihren Transmissionsgrad unveränderten Flächenelemente, also zum Beispiel die vollständig transparenten Flächenelemente. Alle Flächenelemente 8 und 9 sind mit einer Steuereinheit 10, beispielsweise einer ECU, verbunden und durch diese steuerbar, beispielsweise regelbar.

Die Steuereinheit 10 ist dazu ausgelegt, in Abhängigkeit von der Strahlungsintensität und der Einstrahlungsrichtung 3 des Sonnenlichts 2 den Transmissionsgrad einer ausgewählten Anzahl der Flächenelemente 9 zu verringern, so dass die ausgewählten Flächenelemente 9 ein Muster erzeugen. Dabei ist das erzeugte Muster in Abhängigkeit von der Einstrahlungsrichtung 3 des Sonnenlichts 2 oder deren Projektion 5 auf die Oberfläche 17 veränderbar.

Im Rahmen des Verfahrens zum Betreiben eine erfindungsgemäßen Sonnenschutzvorrichtung, beispielsweise eines in den Figuren 1 und 5 gezeigten Sonnendaches, wird die Strahlungsintensität der Sonneneinstrahlung auf die Oberfläche 17 bestimmt. Die Richtung der Sonneneinstrahlung 5 in Bezug auf die Oberfläche 17 wird bestimmt. Falls die Strahlungsintensität einen Schwellenwert überschreitet, wird der Transmissionsgrad einer Anzahl an Flächenelementen 9 verringert. Diese werden also abgedunkelt. Dabei wird die Anzahl der ausgewählten Flächenelemente in Abhängigkeit von der Strahlungsintensität festgelegt und die Flächenelemente werden in Bezug auf ihre Position auf der Oberfläche 17 so ausgewählt, dass ein Muster erzeugt wird. Das Muster wird in Abhängigkeit von der Einstrahlungsrichtung 3 des Sonnenlichts oder deren Projektion 5 verändert. Bevorzugt wird ein oben bereits anhand der Figuren 1 bis 3 beschriebenes dreieckige Strukturen umfassendes Muster erzeugt.

Die Flächenelemente 8 und 9 können Glas umfassen. Weiterhin können eine Anzahl oder alle der Flächenelemente elektrochromatisches Material und/oder thermochromatisches Material und/oder micro-blinds umfassendes Material und/oder nanokristallines Material und/oder PDLC-Material und/oder Flüssigkristall-Material umfassen. Grundsätzlich kann die Oberfläche 17 mit einem LCD-Film überzogen sein, zum Beispiel mit einem elektrochromatischen LCD-Film.

Die Figur 5 zeigt schematisch ein erfindungsgemäßes Kraftfahrzeug 15. Dieses umfasst ein Dach 18 und eine als Sonnendach ausgestaltete erfindungsgemäße Vorrichtung 4.

### Bezugszeichenliste

1 Sonne
2 Lichtkegel
3 Einstrahlungsrichtung
4 Sonnenschutzvorrichtung
5 Projektion der Einstrahlungsrichtung
6 Fahrzeugsitz
7 Schattenwurf
8 Flächenelement
9 Flächenelement
10 Steuereinrichtung
11 Veränderung des Musters
12 vertikale Linie
13 horizontale Linie
15 Kraftfahrzeug
16 lichtdurchlässiges Bauteil
17 Oberfläche
18 Fahrzeugdach

## Patentansprüche

1. Sonnenschutzvorrichtung (4) zum Beschatten einer lichtdurchlässigen Oberfläche, wobei die Sonnenschutzvorrichtung (4) ein lichtdurchlässiges Bauteil (16) mit einer Oberfläche (17) und einer Anzahl auf der Oberfläche (17) rasterförmig angeordneter Flächenelemente (8, 9), die dazu ausgelegt sind ihren Transmissionsgrad zu verändern, umfasst,
wobei die Sonnenschutzvorrichtung (4) mindestens eine Vorrichtung zur Bestimmung der Strahlungsintensität der Sonnenlichteinstrahlung (2), mindestens eine Vorrichtung zur Bestimmung der Einstrahlungsrichtung (3, 5) des Sonnenlichts (2) und mindestens eine Steuereinrichtung (10) umfasst,
**dadurch gekennzeichnet, dass** die Steuereinrichtung (10) dazu ausgelegt ist, in Abhängigkeit von der Strahlungsintensität und der Einstrahlungsrichtung (3, 5) des Sonnenlichts (2) den Transmissionsgrad einer ausgewählten Anzahl der Flächenelemente (8, 9) zu verringern, sodass die ausgewählten Flächenelemente (8, 9) ein eine Mehrzahl an dreieckigen Strukturen umfassendes Muster erzeugen, welches in Abhängigkeit von der Einstrahlrichtung (3, 5) des Sonnenlichts (2) veränderbar ist.

2. Sonnenschutzvorrichtung (4) nach Anspruch 1,
**dadurch gekennzeichnet, dass**
die Steuereinrichtung dazu ausgelegt ist, die Dichte der ausgewählten Flächenelemente in Richtung der Projektion der Richtung, aus der die Sonneneinstrahlung kommt, auf die Oberfläche zu erhöhen.

3. Sonnenschutzvorrichtung (4) nach einem der Ansprüche 1 oder 2,
**dadurch gekennzeichnet, dass**
die Steuereinrichtung (10) dazu ausgelegt ist, die Flächenelemente (8, 9) so auszuwählen, dass diese ein Muster erzeugen, welches den Schattenwurf eines Baumes imitiert.

4. Sonnenschutzvorrichtung (4) nach einem der Ansprüche 1 bis 3,
**dadurch gekennzeichnet, dass**
die Steuereinrichtung (10) dazu ausgelegt ist, die Flächenelemente (8, 9) so auszuwählen, dass diese ein Fraktale umfassendes Muster erzeugen.

5. Sonnenschutzvorrichtung (4) nach einem der Ansprüche 1 bis 4,
**dadurch gekennzeichnet, dass**
die Steuereinrichtung (10) dazu ausgelegt ist, die Flächenelemente (8 ,9) so auszuwählen, dass diese ein Muster in der Form eines Sierpinski-Dreiecks erzeugen.

6. Sonnenschutzvorrichtung (4) nach einem der Ansprüche 1 bis 5,
**dadurch gekennzeichnet, dass**
eine Anzahl der Flächenelemente (8, 9) Glas und/oder elektrochromatisches Material und/oder thermochromisches Material und/oder Micro-blinds umfassendes Material und/oder nanokristallines Material und/oder PDLC-Material und/oder Flüssigkristall-Material umfassen.

7. Sonnendach, welches eine Sonnenschutzvorrichtung (4) nach einem der Ansprüche 1 bis 6 umfasst.

8. Fahrzeug (15), welches eine Sonnenschutzvorrichtung (4) nach einem der Ansprüche 1 bis 6 und/oder ein Sonnendach nach Anspruch 7 umfasst.

9. Verfahren zum Betreiben einer Sonnenschutzvorrichtung (4) zum Beschatten einer lichtdurchlässigen Oberfläche, wobei die Sonnenschutzvorrichtung (4) ein lichtdurchlässiges Bauteil (16) mit einer Oberfläche (17) und einer Anzahl auf der Oberfläche (17) rasterförmig angeordneter Flächenelemente (8, 9), die dazu ausgelegt sind ihren Transmissionsgrad zu verändern, umfasst,
**dadurch gekennzeichnet, dass**
die Strahlungsintensität der Sonnenlichteinstrahlung (2) auf die Oberfläche (17) bestimmt wird,
die Richtung (3, 5) der Sonnenlichteinstrahlung (2) in Bezug auf die Oberfläche (17) bestimmt wird,
falls die Strahlungsintensität einen Schwellenwert überschreitet, der Transmissionsgrad einer Anzahl an Flächenelementen (8, 9) verringert wird, wobei die Anzahl in Abhängigkeit von der Strahlungsintensität festgelegt wird und die Flächenelemente (8, 9) in Bezug auf ihre Position auf der Oberfläche (17) so ausgewählt werden, dass ein eine Mehrzahl an dreieckigen Strukturen umfassendes Muster erzeugt wird, wobei das Muster in Abhängigkeit von der Einstrahlrichtung (3, 5) des Sonnenlichts (2) verändert wird.

10. Verfahren nach Anspruch 9,
**dadurch gekennzeichnet, dass**
die Flächenelemente (8, 9) so ausgewählt werden, dass die Dichte der ausgewählten Flächenelemente (8, 9) in Richtung der Projektion (5) der Richtung der Sonneneinstrahlung (3) auf die Oberfläche (17) abnimmt.

11. Verfahren nach einem der Ansprüche 9 oder 10,
**dadurch gekennzeichnet, dass**
die Flächenelemente (8, 9) so ausgewählt werden, dass diese ein Muster erzeugen, welches den Schattenwurf eines Baumes imitiert.

12. Verfahren nach einem der Ansprüche 9 bis 11,
**dadurch gekennzeichnet, dass**
die Flächenelemente (8, 9) so ausgewählt werden, dass ein Fraktale umfassendes Muster erzeugt wird.

13. Verfahren nach einem der Ansprüche 9 bis 12,
**dadurch gekennzeichnet, dass**
die Flächenelemente (8, 9) so ausgewählt werden, dass diese ein Muster in der Form mindestens eines Sierpinski-Dreiecks erzeugen.

## Claims

1. Solar-protection device (4) for shading a light-transmitting surface, said solar-protection device (4) including a light-transmitting component (16) with a surface (17) and with a number of surface elements (8, 9) arranged on the surface (17) in the form of a grid, which are designed to vary their transmittance,
said solar-protection device (4) including at least one device for determining the radiation intensity of the sunlight irradiation (2), at least one device for determining the direction of irradiation (3, 5) of the sunlight (2), and at least one control unit (10),
**characterized in that**
said control unit (10) is designed to reduce, in a manner depending on the radiation intensity and on the direction of irradiation (3, 5) of the sunlight (2), the transmittance of a selected number of surface elements (8, 9), so that the selected surface elements (8, 9) generate a pattern comprising a plurality of triangular structures that can be varied in a manner depending on the direction of irradiation (3, 5) of the sunlight (2).

2. Solar-protection device (4) according to Claim 1,
**characterized in that**
the control unit is designed to increase the density of the selected surface elements in the direction of the projection of the direction from which the solar irradiation is coming onto the surface.

3. Solar-protection device (4) according to either of Claims 1 and 2,
**characterized in that**
the control unit (10) is designed to select the surface elements (8, 9) in such a way that these elements generate a pattern that imitates the cast shadow of a tree.

4. Solar-protection device (4) according to one of Claims 1 to 3,
**characterized in that**
the control unit (10) is designed to select the surface elements (8, 9) in such a way that these elements generate a pattern comprising fractals.

5. Solar-protection device (4) according to one of Claims 1 to 4,
**characterized in that**
the control unit (10) is designed to select the surface elements (8, 9) in such a way that these elements generate a pattern in the form of a Sierpinski triangle.

6. Solar-protection device (4) according to one of Claims 1 to 5,
**characterized in that**
a number of surface elements (8, 9) include glass and/or material comprising electrochromatic material and/or thermochromatic material and/or micro-blinds, and/or nanocrystalline material and/or PDLC material and/or liquid-crystal material.

7. Sunroof that includes a solar-protection device (4) according to one of Claims 1 to 6.

8. Vehicle (15) that includes a solar-protection device (4) according to one of Claims 1 to 6 and/or a sunroof according to Claim 7.

9. Method for operating a solar-protection device (4) for shading a light-transmitting surface, said solar-protection device (4) including a light-transmitting component (16) with a surface (17) and with a number of surface elements (8, 9) arranged on the surface (17) in the form of a grid, which are designed to vary their transmittance,
**characterized in that**
the radiation intensity of the sunlight irradiation (2) onto the surface (17) is determined,
the direction (3, 5) of the sunlight irradiation (2) with respect to the surface (17) is determined,
if the radiation intensity exceeds a threshold value, the transmittance of a number of surface elements (8, 9) is reduced, said number being defined in a manner depending on the radiation intensity, and the surface elements (8, 9) are selected with respect to their position on the surface (17) in such a way that a pattern comprising a plurality of triangular structures is generated, said pattern being varied in a manner depending on the direction of irradiation (3, 5) of the sunlight (2).

10. Method according to Claim 9,
**characterized in that**
the surface elements (8, 9) are selected in such a way that the density of the selected surface elements (8, 9) decreases in the direction of the projection (5) of the direction of the solar irradiation (3) onto the surface (17) .

11. Method according to either of Claims 9 and 10, **characterized in that**
the surface elements (8, 9) are selected in such a way that these elements generate a pattern that imitates the cast shadow of a tree.

12. Method according to one of Claims 9 to 11, **characterized in that**
the surface elements (8, 9) are selected in such a way that a pattern comprising fractals is generated.

13. Method according to one of Claims 9 to 12,
**characterized in that**
the surface elements (8, 9) are selected in such a way that these elements generate a pattern in the form of at least one Sierpinski triangle.

## Revendications

1. Dispositif de protection solaire (4) destiné à ombrager une surface photo-transmissive, le dispositif de protection solaire (4) comprenant un composant photo-transmissif (16) pourvu d'une surface (17) et d'un certain nombre d'éléments de surface (8, 9) qui sont disposés suivant une trame sur la surface (17) et qui sont conçus pour modifier leur facteur de transmission, le dispositif de protection solaire (4) comprenant au moins un dispositif de détermination de l'intensité du rayonnement de lumière solaire (2), au moins un dispositif de détermination de la direction de rayonnement (3, 5) de la lumière solaire (2) et au moins une unité de commande (10),
**caractérisé en ce que**
l'unité de commande (10) est conçue pour réduire le facteur de transmission d'un nombre sélectionné d'éléments de surface (8, 9) en fonction de l'intensité de rayonnement et de la direction de rayonnement (3, 5) de la lumière du soleil (2) de sorte que les éléments de surface sélectionnés (8, 9) génèrent un motif qui comprend une pluralité de structures triangulaires et qui peut être modifié en fonction de la direction de rayonnement (3, 5) de la lumière solaire (2).

2. Dispositif de protection solaire (4) selon la revendication 1,
**caractérisé en ce que**
l'unité de commande est conçue pour augmenter la densité des éléments de surface sélectionnés en direction de la projection de la direction, d'où vient le rayonnement solaire, sur la surface.

3. Dispositif de protection solaire (4) selon l'une des revendications 1 et 2,
**caractérisé en ce que**
l'unité de commande (10) est conçue pour sélectionner les éléments de surface (8, 9) de manière à ce qu'ils génèrent un motif qui imite l'ombre projetée par un arbre.

4. Dispositif de protection solaire (4) selon l'une des revendications 1 à 3,
**caractérisé en ce que**
l'unité de commande (10) est conçue pour sélectionner les éléments de surface (8, 9) de manière à ce qu'ils génèrent un motif comprenant des fractales.

5. Dispositif de protection solaire (4) selon l'une des revendications 1 à 4,
**caractérisé en ce que**
l'unité de commande (10) est conçue pour sélectionner les éléments de surface (8, 9) de manière à ce qu'ils génèrent un motif en forme de triangle de Sierpinski.

6. Dispositif de protection solaire (4) selon l'une des revendications 1 à 5,
**caractérisé en ce que**
un certain nombre des éléments de surface (8, 9) comprennent du verre et/ou une matière électrochromatique et/ou une matière thermochromique et/ou une matière comprenant des micro-stores et/ou une matière nanocristalline et/ou une matière PDLC et/ou une matière à cristaux liquides.

7. Toit ouvrant comprenant un dispositif de protection solaire (4) selon l'une des revendications 1 à 6.

8. Véhicule (15) comprenant un dispositif de protection solaire (4) selon l'une des revendications 1 à 6 et/ou un toit ouvrant selon la revendication 7.

9. Procédé de fonctionnement d'un dispositif de protection solaire (4) destiné à ombrager une surface photo-transmissive, le dispositif de protection solaire (4) comprenant un composant photo-transmissif (16) pourvu d'une surface (17) et d'un certain nombre d'éléments de surface (8, 9) qui sont disposés suivant une trame sur la surface (17) et qui sont conçus pour modifier leur facteur de transmission,
**caractérisé en ce que**
l'intensité du rayonnement de lumière solaire (2) sur la surface (17) est déterminée,
la direction (3, 5) du rayonnement de lumière solaire (2) par rapport à la surface (17) est déterminée,
si l'intensité de rayonnement dépasse une valeur seuil, le facteur de transmission d'un certain nombre d'éléments de surface (8, 9) est réduit, le nombre étant déterminé en fonction de l'intensité de rayonnement et les éléments de surface (8, 9) étant sélectionnés en fonction de leur position sur la surface (17) de manière à générer un motif qui comprend une pluralité de structures triangulaires, le motif étant modifié en fonction de la direction de rayonnement (3, 5) de la lumière solaire (2).

10. Procédé selon la revendication 9,
**caractérisé en ce que**
les éléments de surface (8, 9) sont sélectionnés de manière à ce que la densité des éléments de surface sélectionnés (8, 9) diminue en direction de la projection (5) de la direction du rayonnement solaire (3) sur la surface (17).

11. Procédé selon l'une des revendications 9 et 10, **caractérisé en ce que**
les éléments de surface (8, 9) sont sélectionnés de manière à générer un motif qui imite l'ombre projetée par un arbre.

12. Procédé selon l'une des revendications 9 à 11, **caractérisé en ce que**
les éléments de surface (8, 9) sont sélectionnés de manière à générer un motif qui comprend des fractales.

13. Procédé selon l'une des revendications 9 à 12, **caractérisé en ce que**
les éléments de surface (8, 9) sont sélectionnés de manière à générer un motif sous la forme d'au moins un triangle de Sierpinski.
